# EUROPÄISCHE PATENTANMELDUNG

(11) **EP 2 065 712 A2**
(43) Veröffentlichungstag der Anmeldung: **03.06.2009**
(21) Anmeldenummer: 08018356.9
(22) Anmeldetag: 21.10.2008
(51) Int. Cl.: G01P 13/00

(54) **Strömungs-Überwachungseinheit**

(30) Priorität: 29.11.2007 DE 202007016790 U
(71) Anmelder: Lincoln GmbH, 69190 Walldorf (DE)
(72) Erfinder: Schmidt, Hartmut, 69181 Leimen (DE)
(74) Vertreter: KEIL & SCHAAFHAUSEN Patentanwälte

(57) **Zusammenfassung**

Die Erfindung betrifft ein Leitungszwischenstück (1), das insbesondere als Strömungs-Überwachsungseinheit zum Einbau in eine Öl-Luft-Leitung verwendbar ist. Dabei weist das Leitungszwischenstück (1) einen ersten und einen zweiten Leitungsanschluss (2; 3) sowie wenigstens einen durchsichtigen Wandabschnitt (12) auf.

## Beschreibung

Die Erfindung betrifft eine Strömungs-Überwachsungseinheit zur Kontrolle einer Luftströmung in einem Öl-Luft-System. Derartige Öl-Luft-Systeme werden beispielsweise zur Verteilung von Schmierstoff verwendet, um zum Beispiel mehrere Schmierstellen mit Schmierstoff zu versorgen.

Um kontrollieren zu können, ob die entsprechenden Schmierstoffleitungen von dem Öl-Luft-Gemisch durchströmt werden, ist es bekannt, elektronische Strömungswächter einzusetzen. Diese erfordern sowohl eine elektrische Versorgung als auch einen ausreichenden Platzbedarf.

Aufgabe der vorliegenden Erfindung ist es, eine vereinfachte Kontrolle der Luftströmung in einem Öl-Luft-System zu ermöglichen und insbesondere eine preiswertere oder/und kompaktere Überwachungseinheit bereitzustellen.

Diese Aufgabe wird gelöst durch eine Strömungs-Überwachsungseinheit, die als ein Leitungszwischenstück mit den Merkmalen des Anspruches 1, einen Mischblock mit den Merkmalen des Anspruches 8 oder ein Progressivverteilersystem mit den Merkmalen des Anspruches 15 ausgebildet ist. Vorteilhafte Ausgestaltungen und Weiterbildungen sind in den jeweiligen abhängigen Ansprüchen angegeben.

Bei einem erfindungsgemäßen Leitungszwischenstück zum Einbau in eine Öl-Luft-Leitung weist das Leitungszwischenstück einen ersten und einen zweiten Leitungsanschluss sowie wenigstens einen durchsichtigen Wandabschnitt auf. Vorteilhafterweise ermöglicht dies eine einfache Kontrolle ohne externe Energieversorgung und ohne defektanfällige Bauteile. Vorteilhafterweise weist das Leitungszwischenstück eine Baugröße auf, welche jene einer gewöhnlichen Leitung nicht oder zumindest nicht wesentlich überschreitet. Eine einfach optische Kontrolle der Luftströmung wird beispielsweise dadurch ermöglicht, dass durch den durchsichtigen Wandabschnitt Strömungslinien, Wirbel, Luft- bzw. Gasanschlüsse oder dgl. beobachtet werden können, wobei deren Bewegung in Strömungsrichtung erkannt werden kann. Dies ermöglicht vorteilhafterweise eine einfache visuelle Kontrolle, ob das in der Leitung transportierte Öl-Luft-Gemisch bestimmungsgemäß durch die Leitung transportiert wird. Es versteht sich von selbst, dass das erfindungsgemäße Leitungszwischenstück nicht nur zum Einbau in eine Öl-Luft-Leitung geeignet ist, sondern auch allgemein in eine Leitung für ein mehrphasiges Fluid einsetzbar sein kann. Die verschiedenen Phasen können dabei sowohl feste als auch flüssige oder gasförmige Phasen umfassen.

Der durchsichtige Abschnitt wird beispielsweise durch durchsichtiges Material gebildet. Insbesondere kann das gesamte Leitungszwischenstück aus einem durchsichtigen Material, beispielsweise einem Kunststoff oder einem Kunststoffgemisch, hergestellt sein. Der Abschnitt kann dabei ein in Durchströmungsrichtung des Leitungszwischenstücks angeordneter Abschnitt des Leitungszwischenstücks sein. Es kann jedoch auch vorgesehen sein, dass sich der durchsichtige Wandabschnitt lediglich in einem Teilbereich des Leitungszwischenstückes über einen Teil von dessen Umfang erstreckt.

Das Leitungszwischenstück weist einen ersten und einen zweiten Leitungsanschluss auf, die beispielsweise als Schraub-, Steck- bzw. Rastanschluss, vorzugsweise als Schnellkupplung, ausgestaltet sind. Der erster und der zweiter Leitungsanschluss sind dabei insbesondere in einem Körper des Leitungszwischenstückes integriert, welcher vorzugsweise ein Metallkörper ist. Es kann jedoch auch ein Kunststoffkörper verwendet werden.

Gemäß einer Weiterbildung der Erfindung ist in dem Leitungszwischenstück in Strömungsverbindung mit den Leitungsanschlüssen ein zumindest abschnittsweise transparentes Leitungselement eingesetzt. Dabei handelt es sich insbesondere um ein Rohr. Vorteilhafterweise ermöglicht diese wenigstens zweistückige Ausführung eine besonders stabile Ausgestaltung des Leitungszwischenstückes als Verbindung zwischen zwei daran anzuschließenden Leitungen bei einer gleichzeitig guten Transparenz des Leitungselementes. Beispielsweise ist das Leitungszwischenstück aus einem Metall gefertigt, während das zumindest abschnittsweise transparente Leitungselement aus Kunststoff oder Glas gefertigt ist. Das Leitungselement kann insbesondere vollständig transparent sein. Es kann jedoch auch lediglich ein transparenter Abschnitt in Bezug auf eine Durchströmungsrichtung und/oder ein auf einen Teilumfang des Leitungselementes beschränkter transparenter Abschnitt vorgesehen sein. Das Leitungszwischenstück ist insbesondere im Wesentlichen als eine Hülse ausgestaltet.

In einer Ausgestaltung der Erfindung weist das Leitungszwischenstück wenigstens ein Sichtfenster auf, welches derart angeordnet ist, dass durch das Sichtfenster zumindest ein transparenter Abschnitt des Leitungselementes einsehbar ist. Das Sichtfenster ist dabei beispielsweise als Schlitz, Langloch oder dgl. im Leitungszwischenstück vorgesehen. Vorteilhafterweise ermöglicht das Sichtfenster eine gute visuelle Kontrolle einer Strömung in dem Leitungszwischenstück bei einem gleichzeitig guten Schutz des transparenten Leitungselementes durch das Leitungszwischenstück. Vorteilhafterweise ermöglicht dies eine weitestgehend gekapselte Anordnung des transparenten Leitungselementes, welche insbesondere das Risiko eines Bruches des Leitungselementes zumindest minimiert.

Die Kontrolle einer Strömung in dem Leitungszwischenstück lässt sich erfindungsgemäß verbessern, wenn das Leitungszwischenstück wenigstens eine von dem Sichtfenster verschiedene Beleuchtungsöffnung zur zumindest indirekten Beleuchtung des Leitungselementes aufweist. Beispielsweise kann dazu eine im Wesentlichen dem Sichtfenster gegenüberliegend angeordnete Beleuchtungsöffnung vorgesehen sein. In einer anderen Anordnung kann die Beleuchtungsöffnung jedoch auch so angeordnet sein, dass ein geradliniger Durchtritt von Licht durch die Beleuchtungsöffnung und das Sichtfenster nicht möglich ist. Dies ermöglicht vorzugsweise eine genaue Beobachtung der Strömung anhand von Streuzentren, welche sich mit der Strömung bewegen. Die Streuzentren werden dabei beispielsweise durch Phasengrenzen gebildet. Durch das fehlende direkt durchtretende Licht ist das von den Streuzentren gestreute Licht gut sichtbar.

Die Beleuchtungsöffnung und/oder das Sichtfenster können beispielsweise als Bohrungen in dem insbesondere hülsenförmigen Leitungszwischenstück vorgesehen sein.

Gemäß einer bevorzugten Ausgestaltung der Erfindung ist das Leitungselement in eine insbesondere konzentrisch in dem Leitungszwischenstück angeordnete Bohrung eingesetzt. Dies ermöglicht eine einfache Montage und/oder eine einfache Herstellung. Insbesondere sind Leitungszwischenstück und Leitungselement zwei konzentrisch ineinander eingesetzte hülsenförmige Elemente.

Eine Konfektionierung des Leitungszwischenstückes kann erfindungsgemäß dadurch vereinfacht werden, dass das Leitungselement durch in dem Leitungszwischenstück vorgesehene Dichtelemente gelagert ist. Als Dichtelemente sind beispielsweise O-Dichtungen oder dgl. vorgesehen. Diese sind beispielsweise in einer Nut innerhalb des Leitungszwischenstückes angeordnet. Vorzugsweise sind die Dichtelemente benachbart zu den Leitungsanschlüssen angeordnet. Ein Innendurchmesser der Dichtelemente ist dabei insbesondere so dimensioniert, dass das Leitungselement reibschlüssig in dem Leitungszwischenstück fixiert ist. Dadurch kann es zur Montage eingesetzt werden, ohne von selbst aus dem Leitungszwischenstück herausfallen zu können.

Alternativ oder zusätzlich ist vorgesehen, dass das Leitungselement längs in seiner Durchströmungsrichtung in das Leitungszwischenstück einsteckbar ist, wobei das Leitungselement an durch die Leitungsanschlüsse anschließbare Anschlussstücke gegen Verschiebung sicherbar ist. Dies kann beispielsweise dadurch erreicht werden, dass eine Stirnfläche der Anschlussstücke jeweils an einer Stirnfläche des Leitungselementes in einem eingeschraubten Zustand der Anschlussstücke zu liegen kommt. Die sich gegenüberliegenden Stirnseiten können dabei insbesondere als Dichtsitze ausgebildet sein.

Die Erfindung betrifft zudem einen Mischblock zur Mischung wenigstens zweier Fluide, insbesondere zur Mischung von Öl und Druckluft, wobei der Mischblock wenigstens einen ersten Eingang für ein erstes Fluid und wenigstens einen zweiten Eingang für ein zweites Fluid aufweist, welche Eingänge in wenigstens eine Leitung des Mischblocks münden, welche mit wenigstens einem Ausgang des Mischblocks in Strömungsverbindung steht, wobei die wenigstens eine Leitung wenigstens einen durchsichtigen Wandabschnitt aufweist. Vorteilhafterweise ermöglicht dies sowohl eine Kontrolle eines Materialtransportes durch den Mischblock als auch eine Kontrolle einer Zusammensetzung des Materials aus wenigstens dem ersten Fluid und dem zweiten Fluid, insbesondere von Öl und Druckluft. Insbesondere können mehr als zwei Eingänge vorgesehen sein, so dass mehr als zwei Fluide oder mehrere Teilströme mischbar sind.

Zur Bildung des durchsichtigen Wandabschnittes ist der Mischblock beispielsweise zumindest teilweise aus einem transparenten Material gefertigt. So kann der gesamte Mischblock aus einem transparenten Kunststoff oder einer transparenten Kunststoffmischung gefertigt sein. Es kann jedoch auch vorgesehen sein, einen transparenten Wandabschnitt in einen ansonsten undurchsichtigen Mischblock einzusetzen.

In einer ersten Ausgestaltung weist der Mischblock genau eine mit genau einem Ausgang in Verbindung stehende Leitung auf, welche zur Versorgung beispielsweise einer Schmierstelle mit einem Öl-Druckluftgemisch dienen kann. Gemäß einer anderen Ausgestaltung weist der Mischblock wenigstens zwei, vorzugsweise drei oder mehr Leitungen auf, von denen wenigstens eine, vorzugsweise alle, einen durchsichtigen Wandabschnitt aufweisen. Z. B. weist der Mischblock sechs gleichartige Leitungen auf, welche jeweils zur Versorgung einer oder mehrerer Schmierstelle vorgesehen sein können. An Stelle von gleichartigen Leitungen kann beispielsweise nur ein Teil der Leitungen für ein Gemisch der wenigstens zwei Fluide, insbesondere Öl und Druckluft, und ein anderer Teil der Leitungen beispielsweise zur Durchleitung von Luft oder Öl vorgesehen sein.

Gemäß einer Weiterbildung des Mischblockes weist dieser wenigstens ein Sichtfenster auf, welches derart angeordnet ist, dass der durchsichtige Wandabschnitt der wenigstens einen Leitung einsehbar ist. Dies ermöglicht eine möglichst geschlossene Bauweise des Mischblockes und einen möglichst guten mechanischen Schutz der wenigstens einen Leitung. Diese Ausgestaltung ist insbesondere günstig, wenn der durchsichtige Wandabschnitt der wenigstens einen Leitung aus einem Material wie Glas oder Kunststoff gefertigt ist. Der Mischblock ist im Gegensatz dazu beispielsweise aus einem Metall gefertigt. Vorteilhafterweise ermöglicht die Fertigung aus Metall eine robuste Ausgestaltung der Eingänge und des wenigstens einen Ausgangs insbesondere als Schraub-, Steck-, Rastanschlüsse oder Schnellkupplungsanschlüsse. An Stelle von Metall kann jedoch auch ein insbesondere nicht transparenter Kunststoff verwendet werden.

Das wenigstens eine Sichtfenster ist beispielsweise durch eine Bohrung, insbesondere eine Langlochbohrung, in dem Mischblock gebildet. Dies ermöglicht eine Herstellung des Mischblockes aus einem Vollmaterial, insbesondere einem Metallblock.

Die Empfindlichkeit der visuellen Kontrolle lässt sich verbessern, wenn der Mischblock wenigstens eine von dem Sichtfenster verschiedene Beleuchtungsöffnung aufweist, welche derart angeordnet ist, dass durch die Beleuchtungsöffnung der durchsichtige Wandabschnitt der wenigstens einen Leitung des Mischblocks zumindest indirekt beleuchtbar ist. Beispielsweise ist die Beleuchtungsöffnung in Bezug auf die Leitung im Wesentlichen gegenüberliegend zu dem Sichtfenster angeordnet. Dies kann beispielsweise durch eine Durchbohrung des Mischblockes erreicht werden. Für eine verbesserte Sichtbarkeit von Streulicht, welches durch die Phasengrenzen in dem strömenden Medium hervorgerufen wird, ist die wenigstens eine Beleuchtungsöffnung jedoch so angeordnet, dass eine geradlinige Durchleuchtung von Beleuchtungsöffnung und Sichtfenster nicht möglich ist. Beispielsweise ist die Beleuchtungsöffnung in Bezug auf die Leitung in etwa radial zu der Leitung um 90° versetzt zu einer radialen Sichtachse des Sichtfensters auf der Leitung angeordnet.

Eine Konfektionierung des Mischblocks kann erleichtert werden, wenn die wenigstens eine Leitung wenigstens ein zumindest abschnittsweise transparentes Leitungselement aufweist, welches in dem Mischblock, insbesondere in eine Bohrung, eingesetzt ist. Beispielsweise ist die wenigstens eine Leitung durch eine von einer Stirnseite des Mischblocks in den Block geführte Bohrung gebildet. Radial zu dieser Bohrung kann ein Sichtfenster bzw. der dazugehörige Sichtfensterkanal in diese Leitung münden. Zur Bildung des durchsichtigen Wandabschnittes wird das transparente Leitungselement in die entsprechende Bohrung eingesetzt. Bei dem transparenten Leitungselement handelt es sich beispielsweise um ein Glas- oder Kunststoffrohr. Vorzugweise ist das gesamte Leitungselement aus einem transparenten Material gefertigt. Es kann jedoch auch vorgesehen sein, lediglich einen Längenabschnitt und/oder lediglich einen Umfangsabschnitt des Leitungselementes transparent auszugestalten.

Die Konfektionierung des Mischblocks kann dabei weiter vereinfacht werden, wenn das Leitungselement durch in dem Mischblock vorgesehene Dichtelemente gelagert. Dabei wird das Leitungselement insbesondere reibschlüssig in dem Mischblock fixiert. Vorteilhafterweise kann dieses daher zur Konfektionierung in die entsprechend dafür vorgesehene Bohrung eingesteckt werden, jedoch nicht von selbst herausfallen.

Gemäß einer Ausgestaltung des Mischblockes ist vorgesehen, dass das Leitungselement längs seiner Durchströmungsrichtung in den Mischblock einsteckbar ist, wobei das Leitungselement durch ein an einem dem Leitungselement zugeordneten Anschluss des Mischblockes anschließbares Anschlussstück gegen Verschiebung sicherbar ist. Z. B. wird das Leitungselement bis zu einem in der Bohrung vorgesehenen Absatz in die Bohrung eingesteckt und anschließend mit dem Anschlussstück gesichert, in dem eine Stirnfläche des Anschlussstückes an einer Stirnfläche des Leitungselementes zur Anlage kommt. Die gegenüberliegenden Stirnflächen können dabei jeweils als Dichtflächen ausgestaltet sein. In einer abgewandelten Ausgestaltung kann eine Fixierung auch durch einen separaten Sicherungsring, bspw. ein Schraubring, vorgesehen sein, welcher vor dem Anschließen des Anschlussstückes in die Bohrung eingesetzt wird. An Stelle eines Schraubringes kann selbstverständlich auch ein Sprengring oder eine Verrastung oder dgl. verwendet werden.

Die Erfindung betrifft außerdem ein Progressivverteilersystem zur Verteilung eines Öl-Luft-Gemisches mit wenigstens einem Mischblock gemäß einer der vorstehend beschriebenen Ausgestaltungen. Das Progressivverteilersystem weist dabei insbesondere einen Anschluss für ein erstes Fluid, insbesondere Öl, sowie wenigstens einen Anschluss für ein zweites Fluid, insbesondere Druckluft, auf. Weiterhin umfasst das Progressiwerteilersystem vorzugsweise mehrere Leitungsanschlüsse zur Versorgung mehrerer Schmierstellen.

Im Folgenden wird die Erfindung anhand der Zeichnung im Einzelnen beispielhaft erläutert. Die Erfindung ist jedoch nicht auf die dort dargestellten Merkmalskombinationen beschränkt. Vielmehr können jeweils in der Beschreibung und/oder den Figuren dargestellten Merkmale einzeln oder in Kombination, unabhängig von deren Rückbeziehung in den Schutzansprüchen, erfindungswesentlich sein.

### Es zeigen:

- Fig. 1: einen Längsschnitt eines erfindungsgemäßen Leitungszwischenstückes,
- Fig. 2: einen Querschnitt des in Fig. 1 gezeigten Leitungszwischenstückes,
- Fig. 3: eine Aufsicht auf ein erfindungsgemäßes Leitungszwischenstück,
- Fig. 4: eine Schrägaufsicht auf einen erfindungemäßen Mischblock,
- Fig. 5: eine Aufsicht auf den in Fig. 4 gezeigten Mischblock,
- Fig. 6: eine Frontansicht des Mischblockes,
- Fig. 7: eine Seitenansicht des Mischblockes,
- Fig. 8: einen Querschnitt des Mischblockes und
- Fig. 9: ein erfindungsgemäßes Progressivverteilersystem.

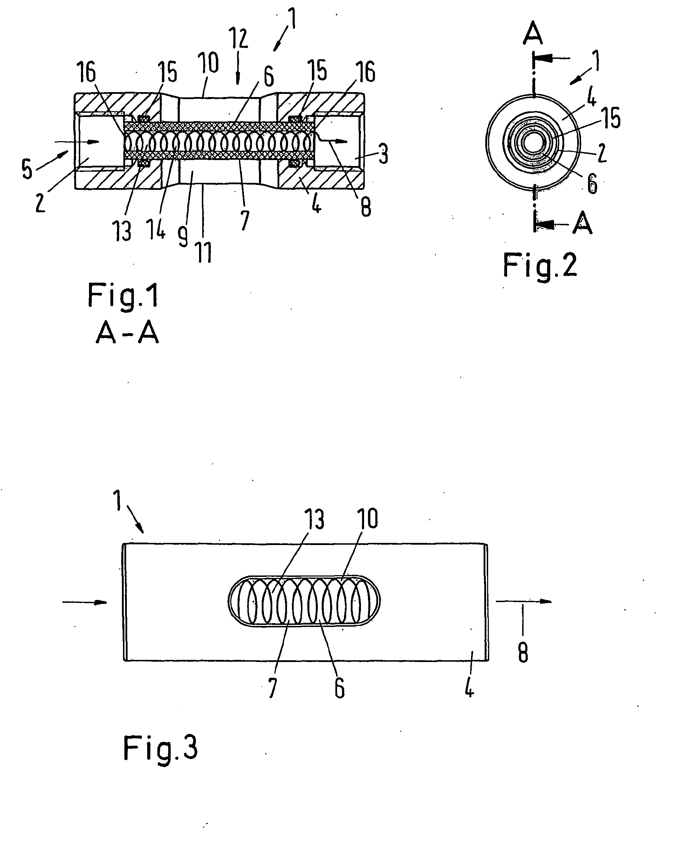

Das in Fig. 1 dargestellte Leitungszwischenstück 1 ist als Strömungs-Überwachsungseinheit zum Einbau in eine nicht dargestellte Öl-Luft-Leitung vorgesehen und weist einen ersten Anschluss 2 auf, welcher als Einlass dient sowie einen zweiten Anschluss 3, welcher als Auslass dient. Ein Körper 4 des erfindungsgemäßen Leitungszwischenstückes 1 ist im Wesentlichen hülsenförmig mit einer zentralen Bohrung 5 ausgestaltet. Der Körper 4 ist dabei aus einem Metall gefertigt. In die zentrale Bohrung 5 ist ein Glasrohr 6 eingesetzt, welches ein transparentes Leitungselement 7 bildet. Quer zu einer Durchströmungsrichtung 8 ist eine Sichtfensterbohrung 9 vorgesehen, durch welche ein Sichtfenster 10 sowie eine Beleuchtungsöffnung 11 gebildet werden. Das Leitungszwischenstück 1 weist somit einen durchsichtigen Wandabschnitt 12 auf, welcher durch das Glasrohr 6 gebildet ist. In der Durchströmungsrichtung 8 strömt ein Öl-Luft-Gemisch 13 durch das Leitungszwischenstück 1, wobei Wirbel- und/oder Phasengrenzen 14 in Strömungsrichtung 8 durch das Leitungszwischenstück 1 transportiert werden und durch das Sichtfenster 10 durch das Glasrohr 6 hindurch beobachtet werden können. Auf diese Weise ist es möglich, zu kontrollieren, ob das Öl-Luft-Gemisch 13 strömt oder ob evtl. ein Stillstand vorliegt, welcher auf einen im Allgemeinen unerwünschten Leitungsverschluss hindeutet.

Zur Fixierung des Glasrohres 6 in dem Körper 4 des Leitungszwischenstückes 1 sind Dichtelemente 15 benachbart zu den Anschlüssen 2, 3 vorgesehen. Dies ermöglicht, dass das Glasrohr 6 beispielsweise durch den Auslass 3 in das Leitungszwischenstück 1 eingesteckt werden kann, um dort reibschlüssig fixiert zu werden.

In einer nicht dargestellten Ausgestaltung können Sichtfenster 10 und Beleuchtungsöffnung 11 auch nicht in einem Winkel von 180°, sondern in einem Winkel von beispielsweise 90° zueinander ausgerichtet sein.

Eine Fixierung des Glasrohres 6 in dem Leitungszwischenstück 1 kann auch dadurch unterstützt werden, dass Stirnflächen des Glasrohres 6 durch nicht dargestellte und in die Anschlüsse 2, 3 eingeschraubte bzw. eingesetzte Anschlüsse gegen eine Verschiebung längs der Durchströmungsrichtung 8 gesichert werden.

Der in Fig. 1 gezeigte Längsschnitt entspricht dem Schnitt entlang einer Linie A-A, welche in dem in Fig. 2 dargestellten Querschnitt eingezeichnet ist. Dieser Querschnitt zeigt den hülsenförmigen Körper 4 des Leitungszwischenstückes 1 sowie das darin eingesetzte Glasrohr 6. Weiterhin ist ein Anschluss 2 sowie ein Dichtelement 15 sichtbar. Sämtliche genannte Elemente sind konzentrisch zueinander angeordnet.

Die Funktionsweise des Sichtfensters 10 ist auch in der in Fig. 3 dargestellten Draufsicht des Leitungszwischenstückes 1 dargestellt. Das Sichtfenster 10 ist dabei in dem hülsenförmigen Körper 4 des Leitungszwischenstückes 1 angeordnet, wobei der Körper 4 einen guten mechanischen Schutz des durch das Sichtfenster 10 nur teilweise sichtbaren Glasrohres 6 ermöglicht. Bei einer Durchströmung des Leitungszwischenstückes 1 in der Durchströmungsrichtung 8 wandern Wirbel- bzw. Phasengrenzen 7 in Richtung der Durchströmungsrichtung 8 durch das Sichtfenster 10. Hierdurch wird eine einfache und wirksame optische Kontrolle einer Strömung des Öl-Luft-Gemisches 13 ermöglicht.

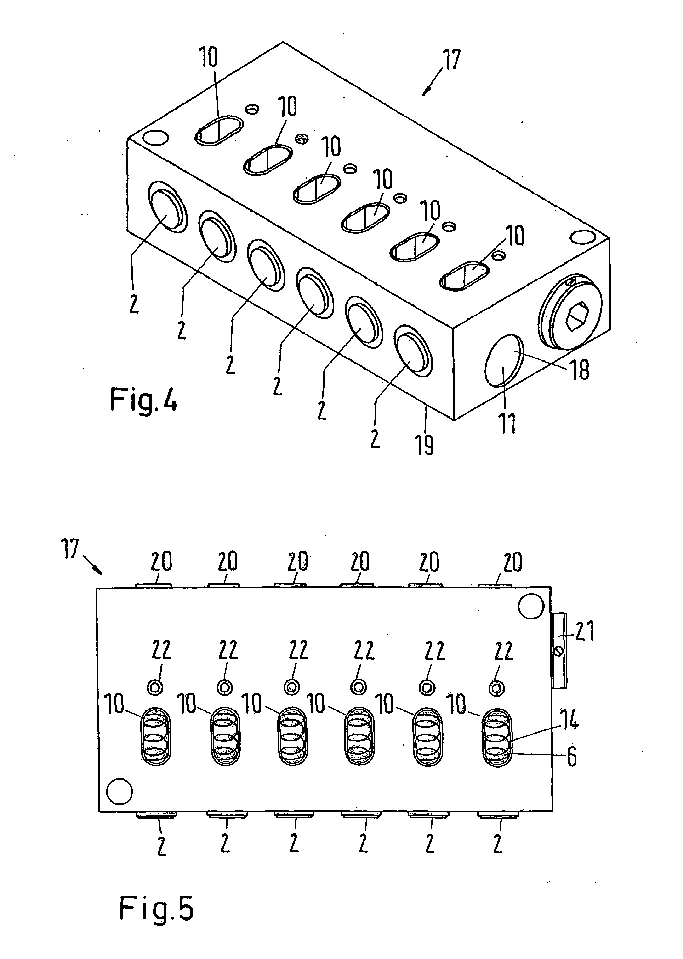

Der in Fig. 4 dargestellte erfindungemäße Mischblock 17 weist als Strömungs-Überwachsungseinheit eine Reihe von Anschlüssen 2 auf, welche zum Auslass eines Öl-Luft-Gemisches vorgesehen sind. Zur Bildung dieses Gemisches weist der Mischblock 17 einen nicht dargestellten Einlass für Öl und einen nicht dargestellten Einlass für Druckluft auf. Den verschiedenen Anschlüssen 2 sind jeweils eine nicht dargestellte Leitung zugeordnet, welche mit dem ersten Eingang für das Öl und dem zweiten Eingang für die Druckluft in Verbindung stehen. Diese nicht dargestellten Leitungen liegen im Wesentlichen unterhalb der Sichtfenster 10, welche einer optischen Kontrolle einer Strömung des Öl-Luft-Gemisches dienen. Zur bessern Beleuchtung der nicht dargestellten, transparenten Leitungselemente ist eine Beleuchtungsöffnung 11 vorgesehen, welche durch eine Bohrung 18 gebildet ist, welche sich parallel zu einer Außenkante 19 des Mischblockes 17 längs durch den Mischblock 17 erstreckt.

Zur besseren Übersicht ist der Mischblock 17 in Fig. 5 in einer Draufsicht dargestellt. Zu sehen sind wiederum die Sichtfenster 10 sowie die Auslässe 2. Weiter sind sechs verschiedene Eingänge 20 für eine Versorgung mit Öl vorgesehen. Eine Versorgung mit Druckluft erfolgt über einen Druckluftanschluss 21. Zur Verhinderung der Zerstörung der durch die Sichtfenster 10 teilweise sichtbaren Glasrohre 6 sind benachbart zu den Sichtfenstern jeweils Überstromventile 22 vorgesehen. Durch die Sichtfenster 10 können wiederum Wirbel- bzw. Phasengrenzen 14 beobachtet werden und so festgestellt werden, ob eine Strömung durch die entsprechenden verschiedenen Anschlüsse 2 vorliegt.

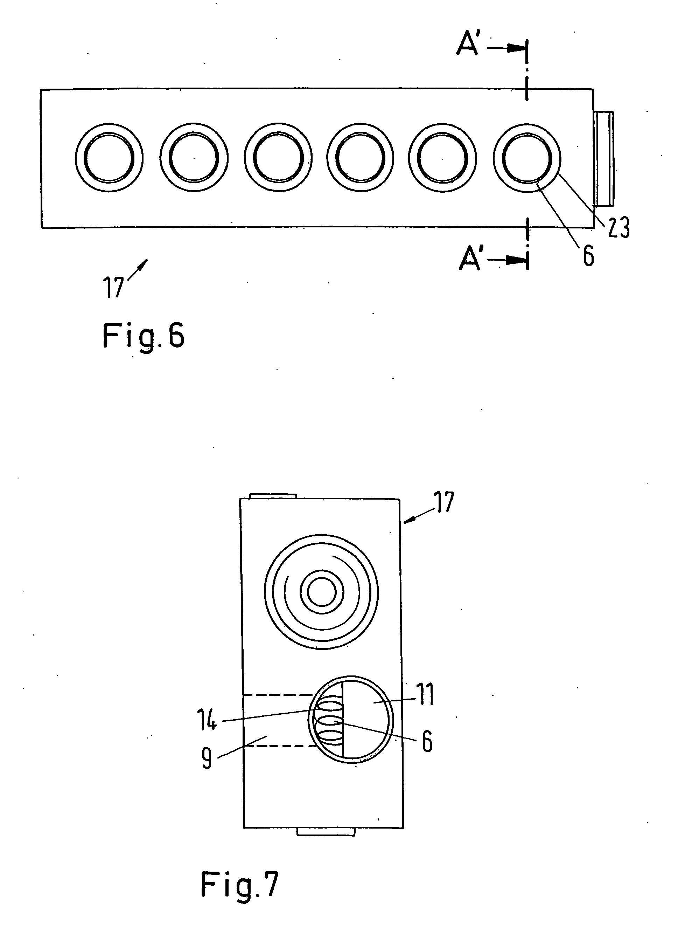

Die Glasrohre 6 sind in der in Fig. 6 dargestellte Frontansicht des Mischblockes 17 ebenfalls zu erkennen. Die Glasrohre 6 sind jeweils in eine zugehörige Anschlussbohrung 23 angesetzt.

Die Funktionsweise der Beleuchtungsöffnung 11 wird in Fig. 7 verdeutlicht. Bei dem dort gezeigten Mischblock 17 ist die Beleuchtungsöffnung 11 so angeordnet, dass durch sie einfallendes Licht auf das dargestellte Glasrohr 6 fällt, so dass an Wirbeln bzw. Phasengrenzen 14 gestreutes Licht durch die gestrichelt dargestellte Sichtfensterbohrung 9 beobachtet werden kann.

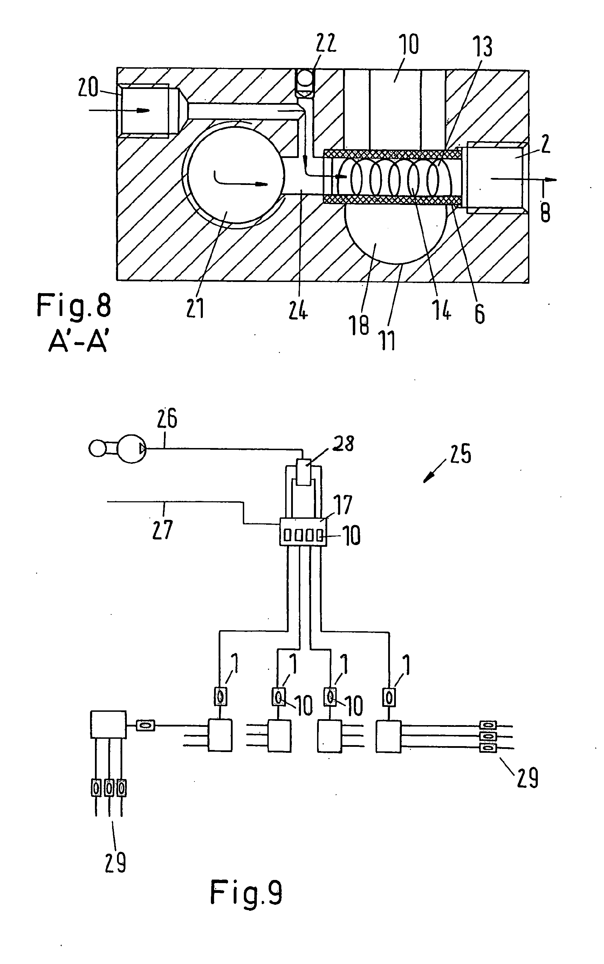

Ein Strömungsverlauf innerhalb des Mischblockes 17 ist am besten in der Darstellung des Querschnittes gemäß Fig. 8 zu sehen. Dieser Querschnitt entspricht einem Schnitt entlang der Linie A'-A'. Zwischen einem Eingang 20 für Öl und einem Anschluss 2 für das Öl-Luft-Gemisch ist eine Leitung 24 angeordnet, welche einerseits mit einem Druckluftanschluss 21 und andererseits mit einem Überstromventil 22 in Strömungsverbindung steht. Weiter weist die Leitung 24 ein darin eingesetztes Glasrohr 6 auf, welches vollständig durchsichtig ist. Daher kann ein durch die Leitung 24 in einer Durchströmungsrichtung 8 strömendes Öl-Luft-Gemisch 13 durch das Sichtfenster 10 optisch begutachtet werden. Anhand von Wirbeln bzw. Phasengrenzen 14, welche sich in Durchströmungsrichtung 8 durch die Leitung 24 bewegen, kann optisch kontrolliert werden, ob das Öl-Luft-Gemisch 13 in Bewegung ist. Zur besseren Beleuchtung des Öl-Luft-Gemisches 13 in dem Glasrohr 6 ist die Bohrung 18 der Beleuchtungsöffnung 11 vorgesehen.

Die in den vorangegangen Figuren beschriebenen Leitungszwischenstücke bzw. Mischblöcke können beispielsweise in einem Progressivverteilersystem 25 gemäß Fig. 9 verwendet werden. Ausgehend von einer Ölversorgung 26 und einer Druckluftversorgung 27 erfolgt eine kaskadierte Verteilung des Öls und der Druckluft zunächst als Gemisch in einem Mischblock 17, welchem ein Ölverteiler 28 vorgeschaltet ist. Der Mischblock 17 weist zur optischen Kontrolle Sichtfenster 10 auf. Dies ermöglicht eine versorgungsnahe bzw. verteilernahe Kontrolle einer Strömung des zu verteilenden Öl-Luft-Gemisches. Zur weiteren Kontrolle im Verlauf sind mehrere erfindungsgemäße Leitungszwischenstücke 1 vorgesehen, welche jeweils ein Sichtfenster 10 aufweisen. Dies ermöglicht auch eine sichere optische Kontrolle des gewünschten Materialtransportes entfernt von der Öl- bzw. Druckluftversorgung 26, 27. Über weitere Verteiler gelangt das Öl-Luft-Gemisch schließlich zu den zu versorgenden Schmierstellen 29.

### Bezugszeichenliste:

- 1: Leitungszwischenstück
- 2: erster Anschluss
- 3: zweiter Anschluss
- 4: Körper (des Leitungszwischenstückes)
- 5: zentrale Bohrung
- 6: Glasrohr
- 7: transparentes Leitungselement
- 8: Durchströmungsrichtung
- 9: Sichtfensterbohrung
- 10: Sichtfenster
- 11: Beleuchtungsöffnung
- 12: durchsichtiger Wandabschnitt
- 13: Öl-Luft-Gemisch
- 14: Wirbel-/Phasengrenzen
- 15: Dichtelement
- 16: Stirnfläche
- 17: Mischblock
- 18: Bohrung
- 19: Außenkante
- 20: Eingänge
- 21: Druckluftanschluss
- 22: Überstromventil
- 23: Anschlussbohrung
- 24: Leitung
- 25: Progressiwerteilersystem
- 26: Ölversorgung
- 27: Druckluftversorgung
- 28: Ölverteiler
- 29: Schmierstellen

## Patentansprüche

1. Leitungszwischenstück (1), insbesondere als Strömungs-Überwachsungseinheit, zum Einbau in eine Öl-Luft-Leitung, wobei das Leitungszwischenstück (1) einen ersten und einen zweiten Leitungsanschluss (2; 3) sowie wenigstens einen durchsichtigen Wandabschnitt (12) aufweist.

2. Leitungszwischenstück (1) nach Anspruch 1, **dadurch gekennzeichnet, dass** in dem Leitungszwischenstück (1) in Strömungsverbindung mit den Leitungsanschlüssen (2; 3) ein zumindest abschnittsweise transparentes Leitungselement (6; 7) eingesetzt ist.

3. Leitungszwischenstück (1) nach Anspruch 2, **dadurch gekennzeichnet, dass** das Leitungszwischenstück (1) wenigstens ein Sichtfenster (10) aufweist, welches derart angeordnet ist, dass durch das Sichtfenster (10) zumindest ein transparenter Abschnitt des Leitungselements (6; 7) einsehbar ist.

4. Leitungszwischenstück (1) nach Anspruch 3, **dadurch gekennzeichnet, dass** das Leitungszwischenstück (1) wenigstens eine von dem Sichtfenster (10) verschiedene Beleuchtungsöffnung (11) zur zumindest indirekten Beleuchtung des Leitungselementes (6; 7) aufweist.

5. Leitungszwischenstück (1) nach einem der Ansprüche 2 bis 4, **dadurch gekennzeichnet, dass** das Leitungselement (6; 7) in eine insbesondere konzentrisch in dem Leitungszwischenstück (1) angeordnete Bohrung (5) eingesetzt ist.

6. Leitungszwischenstück (1) nach einem der Ansprüche 2 bis 5, **dadurch gekennzeichnet, dass** das Leitungselement (6; 7) durch in dem Leitungszwischenstück (1) vorgesehene Dichtelemente (15) gelagert ist.

7. Leitungszwischenstück (1) nach einem der Ansprüche 2 bis 6, **dadurch gekennzeichnet, dass** das Leitungselement (6; 7) längs seiner Durchströmungsrichtung (8) in das Leitungszwischenstück (1) einsteckbar ist, wobei das Leitungselement (6; 7) durch an die Leitungsanschlüsse (2; 3) anschließbare Anschlussstücke gegen Verschiebung sicherbar ist.

8. Mischblock, insbesondere als Strömungs-Überwachsungseinheit, zur Mischung wenigstens zweier Fluide, insbesondere zur Mischung von Öl und Druckluft (13), wobei der Mischblock (17) wenigstens einen ersten Eingang (20) für ein erstes Fluid und wenigstens einen zweiten Eingang (21) für ein zweites Fluid aufweist, welche Eingänge (20; 21) in wenigstens eine Leitung (24) des Mischblocks (17) münden, welche mit wenigstens einem Ausgang (23) des Mischblocks (17) in Strömungsverbindung steht, wobei die wenigstens eine Leitung (24) wenigstens einen durchsichtigen Wandabschnitt (6) aufweist.

9. Mischblock nach Anspruch 8, **dadurch gekennzeichnet, dass** der Mischblock (17) wenigstens zwei, vorzugsweise drei oder mehr Leitungen (24) aufweist, von denen wenigstens eine, vorzugsweise alle, einen durchsichtigen Wandabschnitt (6) aufweisen.

10. Mischblock nach Anspruch 8 oder 9, **dadurch gekennzeichnet, dass** der Mischblock (17) wenigstens ein Sichtfenster (10) aufweist, welches derart angeordnet ist, dass der durchsichtige Wandabschnitt (6) der Leitung (24) einsehbar ist.

11. Mischblock (17) nach Anspruch 10, **dadurch gekennzeichnet, dass** der Mischblock (17) wenigstens eine von dem Sichtfenster (10) verschiedene Beleuchtungsöffnung (11) aufweist, welche derart angeordnet ist, dass durch die Beleuchtungsöffnung (11) der durchsichtige Wandabschnitt (6) der wenigstens einen Leitung (24) des Mischblocks (17) zumindest indirekt beleuchtbar ist.

12. Mischblock (17) nach einem der Ansprüche 8 bis 11, **dadurch gekennzeichnet, dass** die wenigstens eine Leitung (24) wenigstens ein zumindest abschnittsweise transparentes Leitungselement (6; 7) aufweist, welches in den Mischblock (17), insbesondere in eine Bohrung (23), eingesetzt ist.

13. Mischblock (17) nach einem der Anspruch 12, **dadurch gekennzeichnet, dass** das Leitungselement (6; 7) durch in dem Mischblock (17) vorgesehene Dichtelemente (15) gelagert ist.

14. Mischblock (17) nach Anspruch 12 oder 13, **dadurch gekennzeichnet, dass** das Leitungselement (6; 7) längs seiner Durchströmungsrichtung (8) in den Mischblock (17) einsteckbar ist, wobei das Leitungselement (6; 7) durch ein an einen dem Leitungselement (6; 7) zugeordneten Anschluss (23) des Mischblockes (17) anschließbares Anschlussstück gegen Verschiebung sicherbar ist.

15. Progressivverteilersystem (25), zur Verteilung eines Öl-Luft-Gemisches (13), mit wenigstens einem Mischblock (17) nach einem der Ansprüche 8 bis 14.
